# EUROPÄISCHE PATENTANMELDUNG

(11) **EP 1 918 598 A1**
(43) Veröffentlichungstag der Anmeldung: **07.05.2008**
(21) Anmeldenummer: 07013331.9
(22) Anmeldetag: 07.07.2007
(51) Int. Cl.: F16D 3/56, F16D 3/76

(54) **Drehkopplungsanordnung zur Kopplung zweier Bauteile zur gemeinsamen Drehung**

(30) Priorität: 17.07.2006 DE 102006032981; 29.06.2007 DE 102007030444
(71) Anmelder: ZF Friedrichshafen AG, 88038 Friedrichshafen (DE)
(72) Erfinder: Kühner, Michael, 97523 Schwanfeld (DE); Carlson, Cora, 97456 Hambach (DE); Orlamünder, Andreas, 97453 Schonungen (DE); Matschas, Steffen, 97421 Schweinfurt (DE); Jeppe, Harald, 97422 Schweinfurt (DE)

(57) **Zusammenfassung**

Eine Drehkopplungsanordnung zur Kopplung zweier Bauteile zur gemeinsamen Drehung, insbesondere für einen Antriebsstrang eines Fahrzeugs, umfasst eine erste radialelastische Kopplungsanordnung (24), welche bezüglich eines ersten der Bauteile (18; 44) und bezüglich eines Zwischenelements (22) abgestützt ist und eine Verschiebbarkeit des Zwischenelements (22) bezüglich des ersten Bauteils (18) in einer zu einer Drehachse (A) im Wesentlichen orthogonalen ersten Verschieberichtung zulässt, und eine zweite radialelastische Kopplungsanordnung (26), welche bezüglich des Zwischenelements (22) und des zweiten der Bauteile (14; 46) abgestützt ist und eine Verschiebung des zweiten Bauteils (14; 46) bezüglich des Zwischenelements (22) in einer zur Drehachse (A) im Wesentlichen orthogonalen zweiten Verschieberichtung zulässt, wobei die zweite Verschieberichtung sich von der ersten Verschieberichtung unterscheidet.

## Beschreibung

Die vorliegende Erfindung betrifft eine Drehkopplungsanordnung zur Kopplung zweier Bauteile zur gemeinsamen Drehung, insbesondere für einen Antriebsstrang eines Fahrzeugs.

In Antriebssträngen von Fahrzeugen besteht allgemein die Notwendigkeit, verschiedene zur Drehung zu koppelnde Bauteile so miteinander zu verbinden, dass fehlerhafte Ausrichtungen der Drehachsen dieser Bauteile kompensiert werden können.

Um zwischen zwei zur Drehung zu koppelnden Bauteilen Achsversätzte kompensieren zu können, ist aus der DE 199 26 382 A1 eine Kopplungsanordnung bekannt, bei welcher ein ringartiges Zwischenelement die Drehmomentübertragung zwischen den zur Drehung zu koppelnden Bauteilen realisiert. Diesses Zwischenelement steht in Formschlusseingriff mit den beiden zu koppelnden Bauteilen, wobei bezüglich jedem dieser Bauteile eine Radialverschiebbarkeit durch ineinander eingreifende Vorsprünge und Aussparungen gewährleistet ist und die beiden Verschieberichtungen orthogonal zueinander stehen. Bei vergleichsweise großen zu übertragenden Drehmomenten besteht das Problem, dass die in Formschluss miteinander tretenden Formationen sehr starken Reibkräften unterliegen und somit die gewünschte Kopplungsfunktion nicht mit der erforderlichen Qualität erfüllen können.

Aus der DE 44 16 949 C1 ist eine Kopplungsanordnung bekannt, mit welcher die Reibbeläge einer Kupplungsscheibe an einen Nabenbereich angebunden werden können. Diese Kopplungsanordnung umfasst axialelastische Blattfederelemente, welche Taumelbewegungen zulassen und somit zwischen den zur Drehung zu koppelnden Bauteilen vorhandene Achsneigungen kompensieren können.

Es ist die Aufgabe der vorliegenden Erfindung, eine Drehkopplungsanordnung zur Kopplung zweier Bauteile zur gemeinsamen Drehung, insbesondere für einen Antriebsstrang eines Fahrzeugs, vorzusehen, mit welcher in einfacher, gleichwohl zuverlässig wirkender Art und Weise Fehljustierungen der zu koppelnden Bauteile kompensiert werden können.

Erfindungsgemäß wird diese Aufgabe gelöst durch eine Drehkopplungsanordnung zur Kopplung zweier Bauteile zur gemeinsamen Drehung, insbesondere für einen Antriebsstrang eines Fahrzeugs, umfassend eine erste radialelastische Kopplungsanordnung, welche bezüglich einem ersten der Bauteile und bezüglich eines Zwischenelements abgestützt ist und eine Verschiebbarkeit des Zwischenelements bezüglich des ersten Bauteils in einer zu einer Drehachse im Wesentlichen orthogonalen ersten Verschieberichtung zulässt, eine zweite radialelastische Kopplungsanordnung, welche bezüglich des Zwischenelements und des zweiten der Bauteile abgestützt ist und eine Verschiebung des zweiten Bauteils bezüglich des Zwischenelements in einer zur Drehachse im Wesentlichen orthogonalen zweiten Verschieberichtung zulässt, wobei die zweite Verschieberichtung sich von der ersten Verschieberichtung unterscheidet.

Die erfindungsgemäße Drehkopplungsanordnung weist zwei radialelastische Kopplungsanordnungen auf, die bezüglich der Drehachse in unterschiedlicher Richtung wirksam, also elastisch sind. Somit können vor allem Achsversätze kompensiert werden, wobei auf Grund der Elastizität der Kopplungsanordnungen beim Kompensationsvorgang auftretende Reibkräfte weitestgehend vermieden werden können.

Beispielsweise kann vorgesehen sein, dass die zweite Verschieberichtung und die erste Verschieberichtung im Wesentlichen orthogonal zueinander stehen.

Um die in modernen Antriebssystemen sehr häufig vorhandenen beengeten Raumverhältnisse berücksichtigen zu können, wird vorgeschlagen, dass das erste Bauteil, das Zwischenelement und das zweite Bauteil radial gestaffelt angeordnet sind.

Das Zwischenelement kann ringartig ausgebildet sein.

Um in einfacher Art und Weise die Elastizität der Kopplungsanordnungen bereitzustellen, wird vorgeschlagen, dass die erste Kopplungsanordnung wenigstens ein blattfederartig ausgebildetes Verbindungsorgan umfasst, welches in einem ersten Umfangsbereich bezüglich des ersten Bauteils fest ist und in einem bezüglich des ersten Umfangsbereichs in Umfangsrichtung versetzten zweiten Umfangsbereich bezüglich des Zwischenelements fest ist, bzw., dass die zweite Kupplungsanordnung wenigstens ein blattfederartig ausgebildetes Verbindungsorgan umfasst, welches in einem ersten Umfangsbereich bezüglich des Zwischenelements fest ist und in einem bezüglich des ersten Umfangsbereichs in Umfangsrichtung versetzten zweiten Umfangsbereich bezüglich des zweiten Bauteils fest ist.

Eine sehr gleichmäßige Verteilung der zu übertragenden Drehmomente in Umfangsrichtung kann unter Vermeidung von Unwuchtproblemen dadurch erhalten werden, dass die erste Kopplungsanordnung oder/und die zweite Kopplungsanordnung zwei bezüglich der Drehachse einander im Wesentlichen gegenüber liegende Verbindungsorgane umfasst.

Die beiden Kopplungsanordnungen können zueinander in Richtung der Drehachse versetzt liegen, so dass auch eine sehr enge radiale Staffelung der verschiedenen Bauteile nicht zu Platzproblemen führen wird.

Die vorliegende Erfindung wird nachfolgend mit Bezug auf die beiliegenden Zeichnungen detailliert beschrieben. Es zeigt:
- Fig. 1: eine erfindungsgemäße Drehkopplungsanordnung, eingesetzt in einer Kupplungsscheibe einer Reibungskupplung;
- Fig. 2: eine der Fig. 1 entsprechende Ansicht einer alternativen Ausgestaltungsart der Drehkopplungsanordnung;
- Fig. 3: eine weitere Darstellung einer alternativen Ausgestaltungsart einer erfindungsgemäß aufgebauten Drehkopplungsanordnung, wobei die linke Hälfte und die rechte Hälfte die Fig. 3 in verschiedenen Schnittebenen geschnitten dargestellt sind;
- Fig. 4: eine erfindungsgemäße Drehkopplungsanordnung zwischen dem Ausgangsbereich eines Torsionsschwingungsdämpfers und dem Eingangsbereich einer nasslaufenden Reibungskupplung;
- Fig. 5: einen als Zweimassenschwungrad aufgebauten Torsionsschwingungsdämpfer mit einer erfindungsgemäßen Drehkopplungsanordnung, wie sie in Fig. 2 gezeigt ist;
- Fig. 6: eine Detailansicht einer alternativen Anbindung von elastischen Verbindungsorganen;
- Fig. 7: eine der Fig. 6 entsprechende Ansicht einer weiteren alternativen Ausgestaltung.

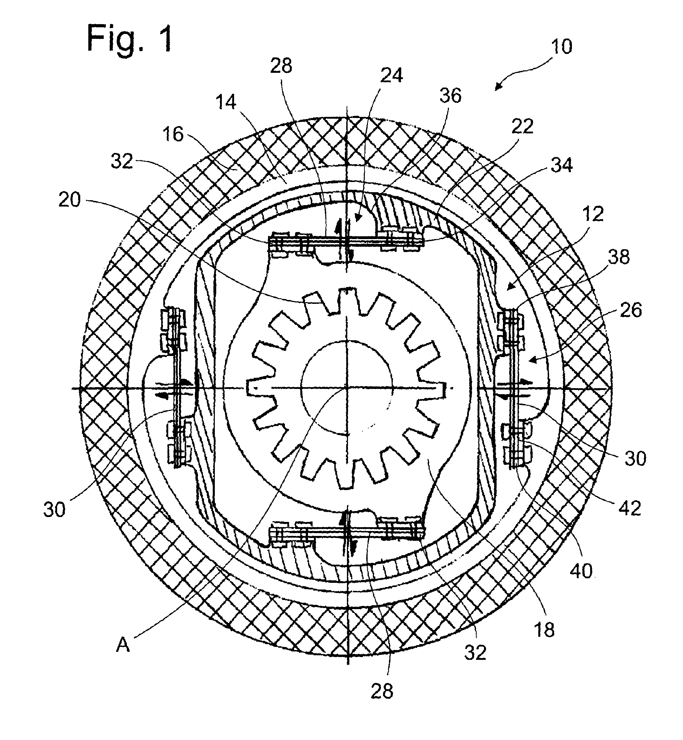

In Fig. 1 ist eine Kupplungsscheibe 10 dargestellt, in welcher eine allgemein mit 12 bezeichnete erfindungsgemäße Drehkopplungsanordnung vorgesehen ist. Die Kupplungsscheibe 10 umfasst im radial äußeren Bereich einen ringartigen Belagträger 14, an welchem beispielsweise als Ringe oder einzelne Segmente ausgebildete Reibbeläge 16 über eine Belagfederung oder durch feste Anbindung getragen sind. Weiter weist im radial inneren Bereich die Kupplungsscheibe 10 eine Nabe 18 mit einer Innenverzahnung 20 auf, über welche die Kupplungsscheibe 10 zur gemeinsamen Drehung mit einer Abtriebswelle, beispielsweise einer Getriebeeingangswelle, zu koppeln ist.

Die Drehkopplungsanordnung 12, über welche die Nabe 18 einerseits und der Belagträger 14 andererseits zur gemeinsamen Drehung zu koppeln sind, umfasst ein ringartig ausgestaltetes Zwischenelement 22, welches die Funktion der Drehmomentübertragung zwischen den beiden zu koppelnden Bauteilen, also der Nabe 18 und dem Belagträger 14, erfüllt. Die Drehkopplungsanordnung 12 umfasst weiterhin zwei Kopplungsanordnungen 24, 26, wobei die Kopplungsanordnung 24 die Funktion der Verbindung zwischen der Nabe 18 und dem Zwischenelement 22 übernimmt, während die Kopplungsanordnung 26 die Funktion der Verbindung zwischen dem Zwischenelement 12 und dem Belagträger 14 übernimmt.

Jede der Kopplungsanordnungen 24, 26 umfasst zwei bezüglich einer Drehachse A einander gegenüberliegende, im dargestellten Beispiel im Wesentlichen punktsymmetrisch bezüglich der Drehachse A angeordnete Verbindungsorgane 28 bzw. 30. Diese Verbindungsorgange 28 bzw. 30 sind jeweils als Blattfedern bzw. Stapel von Blattfedern ausgebildet, die sich näherungsweise in Umfangsrichtung bzw. tangential zur Drehachse A erstrecken und mit ihren Flachseiten der Drehachse A zugewandt liegen.

Die Verbindungsorgane 28 der Kopplungsanordnung 24 sind in einem ersten Umfangsendbereich 32 durch Vernietung am radial äußeren Bereich der Nabe 18 festgelelgt und sind in einem zweiten Umfangsendbereich 34 durch Vernietung an axial abgebogenen Verbindungslaschen 36 des Reibbelagträgers 14 festgelegt. Somit ermöglichen die Verbindungsorgane 28 der ersten Kopplungsanordnung 24 eine radiale Relativebewegbarkeit der Nabe 18 bezüglich des Zwischenelements 22 in einer Richtung orthogonal zur Drehachse A und auch senkrecht zu den jeweiligen Oberflächen bzw. Seiten der Verbindungsorgane 28.

Die Verbindungsorgane 30 der zweiten Kopplungsanordnung 26 sind in einem ersten Umfangsendbereich 38 durch Vernietung am Zwischenelement 22 festgelegt und sind in einem zweiten Umfangsendbereich 40 durch Vernietung an axial abgebogenen Laschen 42 des Belagträgers 14 festgelegt. Durch die Positionierung der Verbindungsorgane 30 der zweiten Kopplungsanordnung 26 relativ zu den Verbindungsorganen 28 der ersten Kopplungsanordnung ergibt sich eine Relativbewegbarkeit zwischen dem Belagträger 14 und dem Zwischenelement 22, deren Verschieberichtung senkrecht steht zu der vorangehend erläuterten Verschieberichtung, die bei Verschiebung der Nabe 18 bezüglich des Zwischenelements 22 vorhanden ist. Auf diese Art und Weise kann ohne der Erzeugung von Zwängungen oder irgendwelcher Reibeffekte auch bei vergleichsweise großen zu übertragenden Drehmomenten ein Achsversatz kompensiert werden, und zwar beispielsweise generiert dadurch, dass die mit der Nabe 18 zu koppelnde Getriebeeingangswelle nicht exakt in einer Flucht liegt mit der einangsseitig mit einer Reibungskupplung zu koppelnden Antriebswelle, also beispielsweise die Kurbelwelle einer Brennkraftmaschine. Auf Grund der Elastizität der als Blattfedern oder Blattfederstapel ausgebildeten Verbindungsorgane 28, 30 ermöglichen diese jedoch nicht nur die Kompensation eines Achsversatzes, sondern ermöglichen auch die Kompensation von Achsneigungen, welche bei den miteinander zu koppelnden Bauteilen zu Taumelbewegungen führen.

Man erkennt in Fig. 1 weiter, dass diese radialelastische Verbindung zwischen dem Belagträger 14 und der Nabe 18 sehr platzsparend dadurch erfolgen kann, dass die drei gekoppelten Bauteile, nämlich der Belagträger 14, das Zwischenelement 22 und die Nabe 18 radial gestaffelt und im Wesentlichen koaxial zueinander angeordnet sind. Weiter kann durch die Abflachung des Zwischenelements 22 an zwei diametral gegenüberliegenden Seiten ausreichend Bauraum zur Aufnahme der Verbindungsorgane 30 der zweiten Kopplungsanordnung 26 bereitgestellt werden. Durch die Auswahl der Federsteifigkeit der Verbindungsorgane 28 bzw. 30 kann weiterhin ein Einfluss auf die Entkopplungscharakteristik erhalten werden. Weiter sei darauf hingewiesen, dass diese Radialelastizität, also die Möglichkeit, die beiden festzulegenden Endbereiche jeweilige Verbindungsorgane radial bezüglich einander verlagern zu können, ohne dabei Zwängungen oder Reibeffekte zu erzeugen, nicht nur durch eine federelastische Ausgestaltung erlangt werden kann, sondern auch durch eine gelenkelastische Ausgestaltung, also beispielsweise das Eingliedern zweier Gelenkbereiche in die Verbindungsorgane mit zur Drehachse A im Wesentlichen parallel liegenden Gelenkachsen. Das Vorsehen federelastischer Verbindungsorgane weist jedoch den Vorteil auf, dass diese eine Rückstellcharakteristik aufweisen, so dass im unbelasteten Zustand die zu koppelnden Bauteile eine bestimmte Grundrelativpositionierung bezüglich einander einnehmen. Im Sinne der vorliegenden Erfindung bedeutet also die radiale Elastizität eine radial Flexibilität, diese bereitgestellt durch an die zu koppelnden Bauteile jeweils angebundene Verbindungsorgane, ohne dass dabei die zwingende Notwendigkeit der Erzeugung einer Rückstellkraft durch diese Verbindungsorgane selbst eingeführt wäre.

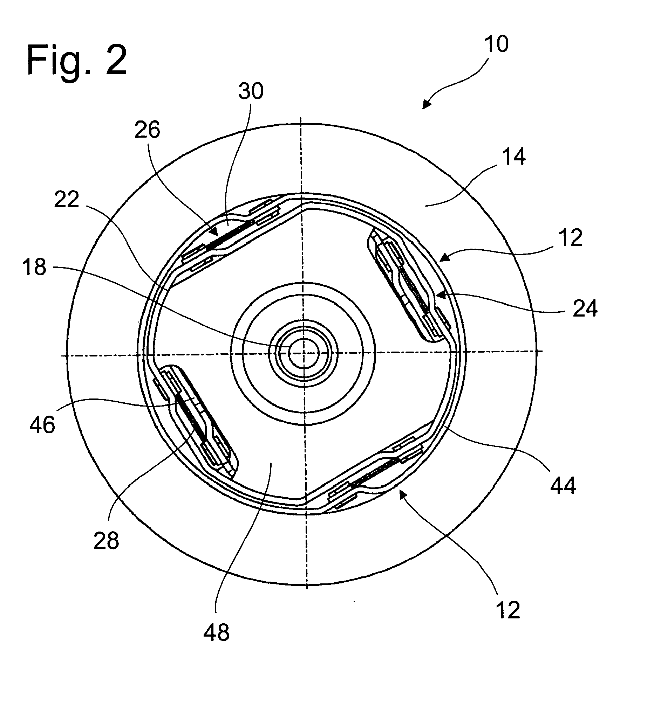

Eine abgewandelte Ausgestaltungsform einer erfindungsgemäß aufgebauten Kopplungsanordnung in einer Kupplungsscheibe 10 ist in Fig. 2 dargestellt. Man erkennt wieder den ringartigen Belagträger 14, der mit einem Außenring 44 der Kopplungsanordnung 12 beispielsweise durch Verschweißen oder dergleichen fest verbunden ist. Dieser Außenring kann also letztendlich auch als Bestandteil des zu koppelnden Bauteils, nämlich hier des Belagträgers 14, interpretiert werden. Ferner ist ein Innenring 46 vorhanden, der durch einen oder mehrere Stege oder ein Scheibenelement mit der Nabe 18 verbunden sein kann. Zwischen diesen beiden Ringen 44 und 46 liegt das auch hier ringartig ausgestaltete Zwischenelement 22, das durch die erste Kopplungsanordnung 24 mit dem Innenring 46 radialelastisch verbunden ist und durch die zweite Kopplungsanordnung 26 mit dem Außenring 44 radialelastisch verbunden ist. Auch hier können die als Blattfedern oder Blattfederstapel ausgebildeten Kopplungsorgane 28 bzw. 30 an ihren jeweiligen Umfangsendbereichen durch Vernietung bezüglich der verschiedenen Ringe 44, 22, 46 festgelegt sein.

Das ringartige Zwischenelement, das die wesentliche Funktion der Drehmomentübertragung erfüllt, kann zur Stabilisierung mit einem oder mehreren Deckscheibenelementen 48 fest verbunden sein, so dass die an verschiedenen Umfangspostionen eingeleiteten bzw. abgeleiteten Drehmomente nicht zu einer Verformung desselben führen können. Dieses Deckscheibenelement 48 kann beispielsweise integral mit dem Zwischenelement 22 durch spanabhebende Bearbeitung hergestellt werden, kann aber selbstverständlich auch durch Verschweißung oder in sonstiger Art und Weise daran festgelegt werden.

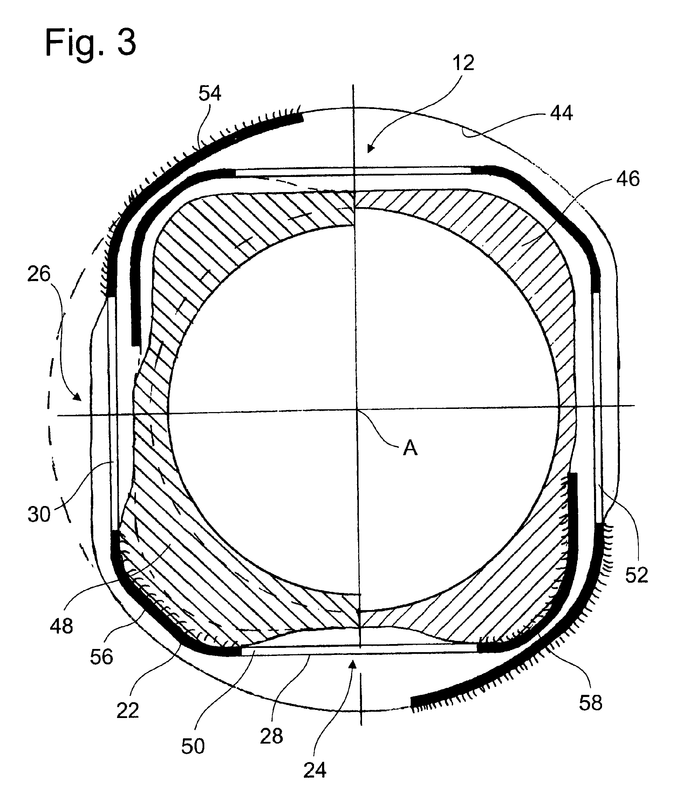

Eine weitere alternative Ausgestaltungsform ist in Fig. 3 gezeigt. Man erkennt hier prinzipiell angedeutet beispielsweise den Außenring 44 oder den Belagträger 14, der über die Kopplungsanordnungen 24 und 26 an den Innenring 46 angekoppelt ist. Es sind zwei mehrfach abgewinkelte Federblechstreifen 50, 52 vorhanden, die bezüglich der Drehachse A um 180° zueinander versetzt liegen, ansonsten jedoch in gleicher Art und Weise in das Gesamtsystem eingebunden sind. So erkennt man, dass der Federblechstreifen 50 an einem Umfangsendbereich 54 beispielsweise durch Verschweißung festgelegt ist am Außenring 44 und ausgehend von diesem Umfangsendbereich, ein Verbindungsorgan 30 der zweiten Kopplungsanordnung 26 bildend, sich näherungsweise tangential erstreckt zu einem Zwischenbereich 56, in welchen der an einem hier nur schematisch anhand eines Deckblechs 48 angedeuteten Zwischenelement 22 festgelegt ist. Ausgehend von dieser Festlegung erstreckt sich der Streifen 50 dann, ein Verbindungsorgan 28 der ersten Kopplungsanordnung 24 bildend, zu einem weiteren Befestigungsbereich 58, in welchem er am Innenring 46 festgelegt ist, der axial hinter dem Deckblech 48 liegt, was dadurch erkennbar wird, dass das Deckblech 48 im linken Teil der Fig. 3 vor diesem Innenring 46 liegend dargestellt ist. Somit sind an einem Federblechstreifen 50, 52 jeweils die Verbindungsorgane 28, 30 für die erste Kopplungsanordnung 24 einerseits und die zweite Kopplungsanordnung 26 andererseits gebildet. Es ergibt sich somit eine Gesamtanordnung, in welcher wieder die beiden Verbindungsorgane 28 der ersten Kopplungsanordnung 24 sich bezüglich der Drehachse A diametral gegenüberliegen und in entsprechender Art und Weise die Verbindungsorgane 30 der zweiten Kopplungsanordnung 26 sich diametral bezüglich der Drehachse A gegenüberliegen. Somit ist der Innenring 46 bezüglich des Außenrings 44 wieder in beiden Verschieberichtungen orthogonal zur Drehachse A bewegbar, wobei diese Bewegbarkeit durch die jeweilige Federelastizität der jeweiligen Kopplungsanordnung 24 bzw. 26 gewährleistet ist.

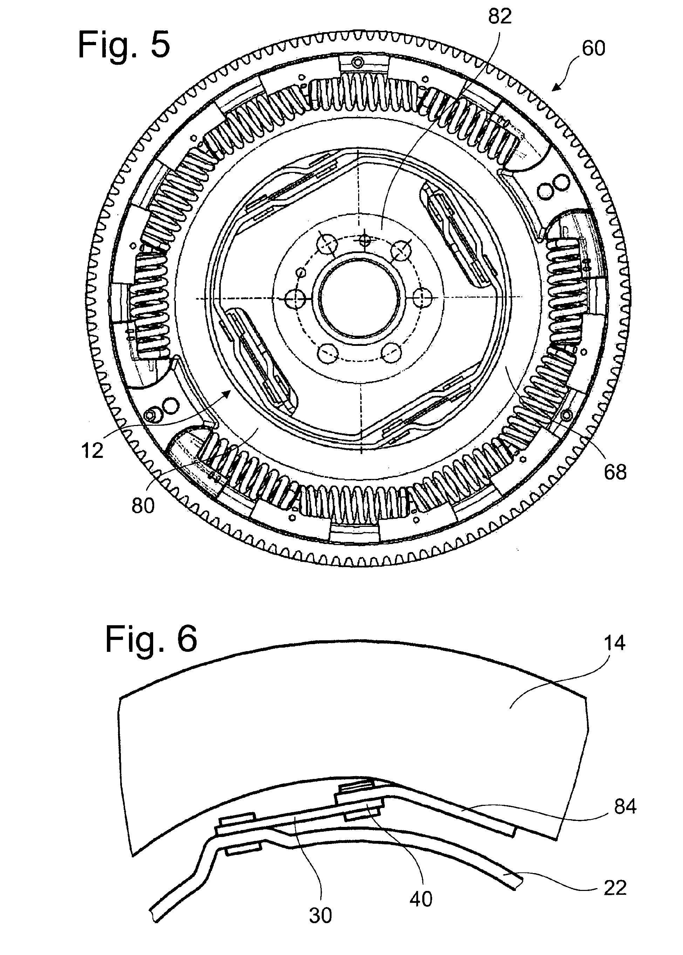

Die Fig. 4 zeigt den Einsatz einer erfindungsgemäßen Kopplungsanordnung 12 zur Verbindung eines als Zweimassenschwungrad ausgebildeten Torsionsschwingungsdämpfers 60 mit dem Eingangsbereich einer nasslaufenden Kraftfahrzeugkupplung 64. Der Torsionsschwingungsdämpfer 60 umfasst eine Primärseite 66 mit zwei Deckscheibenelementen 68, 70, zwischen welche ein Zentralscheibenelement 72 einer Sekundärseite 74 eingreift. Die Primärseite, beispielsweise das Deckscheibenelement 68, ist radial innen an einer Kurbelwelle oder dergleichen festzulegen. Der Außenring 44 der Kopplungsanordnung 18 ist mit einem nach radial innen greifenden Abschnitt durch Vernietung oder dergleichen mit dem Zentratscheibenelement 72 verbunden. Durch die Federelastizität von Dämpfungselementen 76 der Torsionsschwingungsdämpferanordnung 60 besteht somit eine an sich bekannte Schwingungsdämpfungsfunktionalität. Es sei hier darauf hingewiesen, dass selbstverständlich die Torsionsschwingungsdämpferanordnung 60 in anderer Art und Weise ausgebildet sein kann als beispielhaft in Fig. 4 dargestellt.

Der Innenring 46 ist mit einer Nabe 18 fest verbunden oder integral ausgebildet, die durch Verzahnung mit dem Eingangsbereich 62 der nasslaufenden Fahrzeukupplung 64 zur Drehung gekoppelt ist.

In Fig. 5 ist die Integration der erfindungsgemäßen Kopplungsanordnung 12 in einen Torsionsschwingungsdämpfer 60 erkennbar. Man erkennt hier im aufgeschnittenen Zustand das an die Antriebswelle anzubindende Deckscheibenelement 68, das in diesem Falle unterbrochen ist durch die Kopplungsanordnung 12, die den radial äußeren Teil 80 des Deckscheibenelements 68 mit dem radial inneren Teil 82 desselben in der vorangehend beschriebenen Art und Weise radialelastisch koppelt. Es sei hier darauf hingewiesen, dass die in Fig. 5 gezeigte Drehkopplungsanordnung 12 den in Fig. 2 dargestellten Aufbau aufweist, wobei der Außenring 44 mit dem radial äußeren Teil 80 des Deckscheibenelements 68 gekoppelt ist, während der Innenring 46 mit dem radial inneren Teil 82 gekoppelt ist.

Die Fig. 6 zeigt eine alternative Art der Anbindung der Verbindungsorgane 30 der zweiten Kopplungsanordnung an einen Außenring bzw. hier den Reibbelagträger 14. An diesem sind in Zuordnung zu den Verbindungsorganen 30 Verbindungslaschen 84 vorgesehen, welche entweder durch axiales Abbiegen oder durch Verschweißung an dem Belagträger 14 vorgesehen sein können. In einem Umfangsendbereich sind diese so abgebogen, dass sie durch Vernietung mit dem zweiten Endbereich 40 der Verbindungsorgane 30 fest gekoppelt werden können.

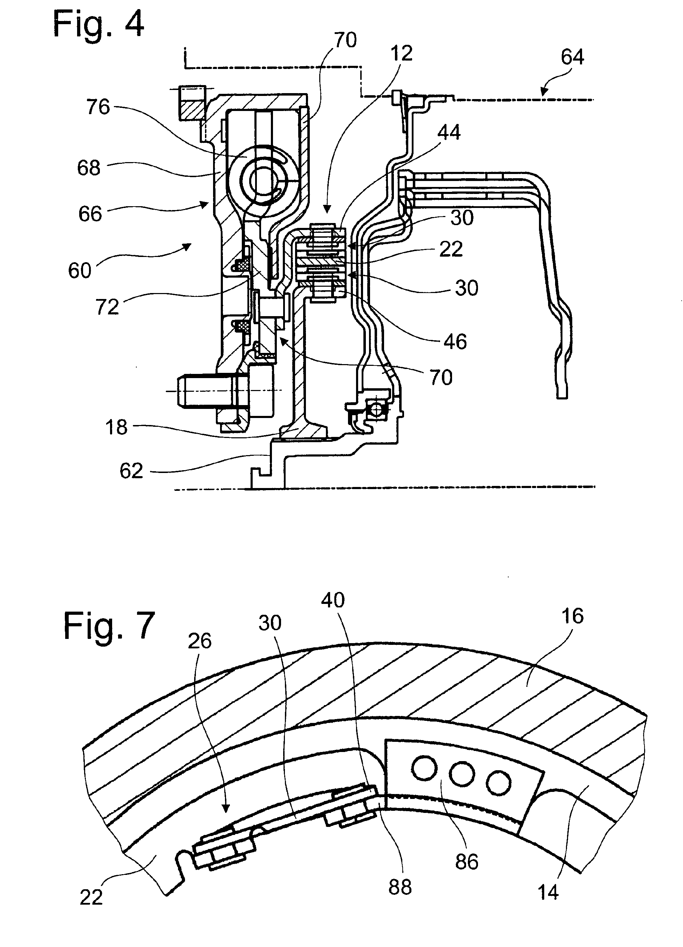

Eine weitere alternative Ausgestaltungsart ist in Fig. 7 gezeigt. Man erkennt hier wieder den ringartigen Reibbelagträger 14 mit den daran vorgesehenen Reibbelägen 16. An diesem sind in Zuordnung zu den Verbindungsorganen 30 durch Vernietung Winkelstücke 86 festgelegt, die einen in Umfangsrichtung sich verlängert erstreckenden Winkelschenkel 88 aufweisen. An diesem ist durch Vernietung der zweite Endbereich 40 der Verbindungsorgane 30 festgelegt. Der Zwischenring 22 erstreckt sich hier axial hinter und teilweise radial sich überlappend mit dem Belagträger 14, woraus erkennbar ist, dass nicht nur eine radiale Staffelung, sondern auch eine axiale Staffelung der durch die verschiedenen Kopplungsanordnungen zu koppelnden Elemente ermöglicht werden kann.

Die vorliegende Erfindung sieht also eine einfach ausgestaltete Möglichkeit der Kopplung zweier miteinander zur Drehung zu verbindenen Bauteile vor, die, ohne radiale Zwängungen oder elementare Reibkräfte zur erzeugen, einen möglicherweise vorhandenen Achsversatz der jeweiligen koppelnden Bauteile kompensieren kann. Es sei noch einmal betont, dass die verschiedenen Kopplungsanordnungen ihre radial elastische Funktion entweder mit federelastischen Verbindungsorganen erfüllen können, die dann eine Rückstellkomponente in eine Ausgangspositionierung bewirken können, oder durch gelenkelastische Verbindungselemente, die keine wesentliche Rückstellkraft erzeugen, die jedoch auf Grund der Scharnierwirkung keiner Verformungskraft unterliegen und mithin sehr verschleißresistent arbeiten.

## Patentansprüche

1. Drehkopplungsanordnung zur Kopplung zweier Bauteile zur gemeinsamen Drehung, insbesondere für einen Antriebsstrang eines Fahrzeugs, umfassend:
- eine erste radialelastische Kopplungsanordnung (24), welche bezüglich eines ersten der Bauteile (18; 44) und bezüglich eines Zwischenelements (22) abgestützt ist und eine Verschiebbarkeit des Zwischenelements (22) bezüglich des ersten Bauteils (18) in einer zu einer Drehachse (A) im Wesentlichen orthogonalen ersten Verschieberichtung zulässt,
- eine zweite radialelastische Kopplungsanordnung (26), welche bezüglich des Zwischenelements (22) und des zweiten der Bauteile (14; 46) abgestützt ist und eine Verschiebung des zweiten Bauteils (14; 46) bezüglich des Zwischenelements (22) in einer zur Drehachse (A) im Wesentlichen orthogonalen zweiten Verschieberichtung zulässt, wobei die zweite Verschieberichtung sich von der ersten Verschieberichtung unterscheidet.

2. Drehkopplungsanordnung nach Anspruch 1, **dadurch gekennzeichent,** dass die zweite Verschieberichtung und die erste Verschieberichtung im Wesentlichen orthogonal zueinander stehen.

3. Drehkopplungsanordnung nach Anspruch 1 oder 2, **dadurch gekennzeichent**, dass das erste Bauteil (18; 44), das Zwischenelement (22) und das zweite Bauteil (14; 46) radial gestaffelt angeordnet sind.

4. Drehkopplungsanordnung nach einem der Ansprüche 1 bis 3, **dadurch gekennzeichnet, dass** das Zwischenelement (22) ringartig ausgebildet ist.

5. Drehkopplungsanordnung nach einem der Ansprüche 1 bis 4, **dadurch gekennzeichnet, dass** die erste Kopplungsanordnung (24) wenigstens ein blattfederartig ausgebildetes Verbindungsorgan (28) umfasst, welches in einem ersten Umfangsbereich (32) bezüglich des ersten Bauteils (18; 44) fest ist und in einem bezüglich des ersten Umfangsbereichs (32) in Umfangsrichtung versetzten zweiten Umfangsbereich (34) bezüglich des Zwischenelements (22) fest ist.

6. Drehkopplungsanordnung nach einem der Ansprüche 1 bis 5, **dadurch gekennzeichnet, dass** die zweite Kupplungsanordnung (26) wenigstens ein blattfederartig ausgebildetes Verbindungsorgan (30) umfasst, welches in einem ersten Umfangsbereich (38) bezüglich des Zwischenelements (22) fest ist und in einem bezüglich des ersten Umfangsbereichs (38) in Umfangsrichtung versetzten zweiten Umfangsbereich (40) bezüglich des zweiten Bauteils (14; 46) fest ist.

7. Drehkopplungsanordnung nach Anspruch 5 oder 6, **dadurch gekennzeichnet, dass** die erste Kopplungsanordnung (24) oder/und die zweite Kopplungsanordnung (26) zwei bezüglich der Drehachse (A) einander im Wesentlichen gegenüberliegende Verbindungsorgane (28; 30) umfasst.

8. Drehkopplungsanordnung nach einem der Ansprüche 1 bis 7, **dadurch gekennzeichnet, dass** die erste Kopplungsanordnung (24) und die zweite Kopplungsanordnung (26) zueinander in Richtung der Drehachse (A) versetzt liegen.
